# EUROPEAN PATENT SPECIFICATION

(11) **EP 2 994 667 B1**
(45) Date of publication and mention of the grant of the patent: **31.05.2017**
(21) Application number: 13737676.0
(22) Date of filing: 08.05.2013
(51) Int. Cl.: F16H 21/54, F15B 15/06

(54) **ROTATABLE ACTUATOR COMPRISING RODS**
DREHBARE BETÄTIGUNGSVORRICHTUNG MIT STANGEN
ACTIONNEUR ROTATIF COMPRENANT DES TIGES

(43) Date of publication of application: 16.03.2016
(73) Proprietor: STI Srl, 24020 Gorle-Bergamo (BG) (IT)
(72) Inventor: TONDOLO, Flavio, 4040 Stezzano (BG) (IT)
(74) Representative: Bruni, Giovanni
(86) International application number: PCT/IT2013/000133
(87) International publication number: WO 2014/181363

(56) References cited:
- DE-A1-102005 025 619
- DE-A1-102010 020 729
- SU-A1- 1 488 610
- US-A- 2 027 386
- US-A- 4 534 232

## Description

The present invention relates to a rotatable or partial turn actuator comprising rods, i.e. a device intended to transform a linear movement in a rotating one and to convert a force in a torque according to the angle of rotation. The angle of rotation can be roughly wide. For angles up to 90° it can be used a constrained linear cylinder with joints at ends thereof which actuates a lever, with the same constraints, and which transforms the linear stroke in angle of rotation. In order to allow greater angles of rotation it is used instead a dedicated cylinder called partial turn actuator. As it is known and very briefly, the technical field here is the one of the partial turn actuators, in particular of the quarter-turn actuators. The partial turn actuator comprising rods is a device which does not require the presence of clearances in the design step and therefore, according to how it is made, it is possible that it is considered without clearances. Such a device is able to transform a linear movement in a rotating one and vice versa thus guaranteeing optimal positioning precision and high efficiency.

At the state of the art, there exist many solutions apt to convert a linear movement in a rotating one. Generally, the solutions currently used can be divided in two categories, those with linear movement orthogonal to the axis of rotation, and those with linear movement parallel to the axis of rotation (coaxial). Normally, the first category is generally used to actuate ON/OFF quarter-turn valves by using the following mechanisms, for example mechanisms with cam or scotch yoke, which inevitably imply parts in contact whereby the relevant relative movement and the force generate high friction forces with consequent efficiency loss and wear and which, unless an expensive embodiment of a double and symmetrical system, generate a considerable radial stress.

Another example is represented by the mechanism with rod or crank, in which considerable reactions forces are generated which have to be absorbed by guides with parts in contact, whereby the relevant relative movement and the force generate friction, efficiency loss and wear. Also in this case, it can be provided an expensive system, a double and symmetrical system, able to annul the considerable radial stress.

Another example is represented by the mechanism with rack and pinion which has considerable intrinsic clearances. However, this type of mechanism has considerable dimensions to support high torques in the typical rotation of 90°. In this case, it should be provided an expensive and complex mechanism with gear wheel and with variable radius to obtain a torque curve according to the angle of rotation different from the linear one, as well as a double and asymmetrical mechanism able to annul a considerable radial stress.

All the solutions just described to guarantee high forces and torques result extremely cumbersome and heavy. In addition, given the intrinsic presence of clearances difficult to be compensated, these devices can be hardly used in applications in which it is required a feed back control or precision actuation.

The second category, to which also the object of the present invention belongs, is the one comprising two further solutions, i.e. the use of systems provided with simple screw/nut screw couplings or with recirculating ball screws and drum cam couplings.

At the state of the art, there are known simple screw/nut screw solutions characterized by an extremely reduced efficiency owing to the presence of extremely high friction. For this reason, the devices realized with such a system have usually extremely high dimensions and weights, which limit their application. In fact, in such systems it is not possible to obtain a torque curve according to the angle of rotation different form the linear one. Moreover, this type of transmission implies the intrinsic presence of clearances which limit their use, in fact such systems cannot be used in devices in which it is required a precise positioning. An example of this kind of technical solutions is provided in document SU1488610 which discloses an actuator according to the preamble of claim 1.

An alternative solution is represented by the recirculating ball screw/nut screw system, which by means of particular measures is more precise than the preceding one. In fact, the presence of prestressed balls guarantees a good efficiency and good positioning precision, both in the conversion of the linear movement in the rotating one and vice versa. Nevertheless, this solution is particularly expensive and not flexible; also in this case it is not possible to obtain a torque curve according to the angle of rotation different from the linear one.

One last solution is represented by the drum cam system (nut screw with variable pitch), which is flexible concerning the possibility to obtain the torque curve according to the angle of rotation different from the linear one, but it implies an extremely reduced contact surface between feeler and cam with consequent development of high contact pressures, wear and clearances.

The known solutions just described are disadvantageous in that they need translating anti-rotation devices, which however reduce their efficacy. Moreover, they are subjected to wear, are expensive and very cumbersome.

Therefore, there is the need for an innovation which allows to solve the above described technical problems thus annulling completely each radial stress on the actuator.

Object of the present invention is a partial turn actuator comprising rods, i.e. a device intended to transform a linear movement in a rotating one or vice versa and to convert a force in a torque according to the angle of rotation or vice versa thus providing all the advantages of the known systems and solving their disadvantages.

This aim is solved by the partial turn actuator object of the present invention, which, thanks to the use of a system made up of some fixed elements, which are translated along an axis or are rotating-translating and connected between each other by means of rods preferably arranged in axial-symmetrical way, is able to annul each radial stress.

The device object of the present invention can be used for example in the controlling and adjusting operations of the quarter-turn valves and for reading a linear position by means of an angular measure or vice versa.

Moreover, the limited weight and dimensions and the easy cylindrical encapsulation make the device usable also in special fields such for example the navy and aero-spatial one.

A preferred embodiment of the present invention provides that the torque curves according to the angle of rotation can be optimized according to the use, by acting in the construction step on the variables which control their kinematic motion.

A first advantage of the present invention is that, in determined ranges, the torque curve according to the angle of rotation can be modified by the final user by simply modifying the stroke limits of the linear movement.

A second advantage is given by the high efficiency, due to the absence of sliding friction with consequent reduction in dissipated power.

Another advantage is given by the very compact dimensions, due to the fact that the device is totally developed around the output shaft.

Another advantage is given by the rod system which is preferably studied so that it is axial-symmetrical, in this way it is annulled each radial stress.

With respect to the known systems which require coupling clearances (for example scotch yoke, screw-nut screw), the rod system does not require them and so it allows a high precision of positioning.

It is also possible to invert the rotation direction of the device with respect to the translation without modifying or substituting a piece, but acting only on the assembly.

Another important aspect is given by the possibility to realize the device with low costs. These and other advantages of the invention will be described in detail in the following with reference to the appended drawings, in which:
Figure 1 shows a preferred embodiment of the partial turn actuator in an initial working step;
Figure 2 shows a preferred embodiment of the partial turn actuator in an intermediate working step;
Figure 3 shows a preferred embodiment of the partial turn actuator in a final working step;
Figure 4 shows a second preferred embodiment of the partial turn actuator;
Figures 5 to 14 show further preferred embodiments of the partial turn actuator;
Figure 15 shows the torque curve according to the angle of rotation; parabolic/hyperbolic curve with concavity upwards;
Figure 16 shows a torque curve according to the angle of rotation: asymptotic curve with development from 0 to infinite.

As it is shown in the appended figures, object of the present invention is a partial turn actuator comprising an output shaft 1, a first element 5 with a degree of freedom to translation, said element 5 being moved by a driving power, a second axially constrained element 2, 10, 11, 15, at least one of said elements having a degree of freedom to rotation according to which it is mechanically connected to the output shaft 1 and at least a rod 6, 7 constrained by means of a first hinge to the first piston element 5 and by means of a second hinge to the second axially constrained element, so that the translation of the piston 5 is converted in a rotation of the element having a degree of freedom to rotation, and as a consequence, of the output shaft 1.

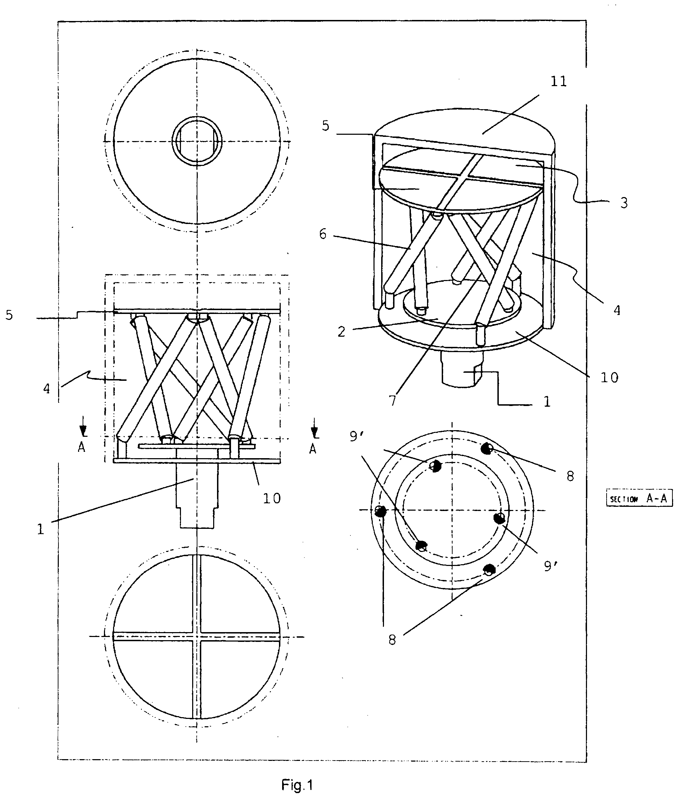

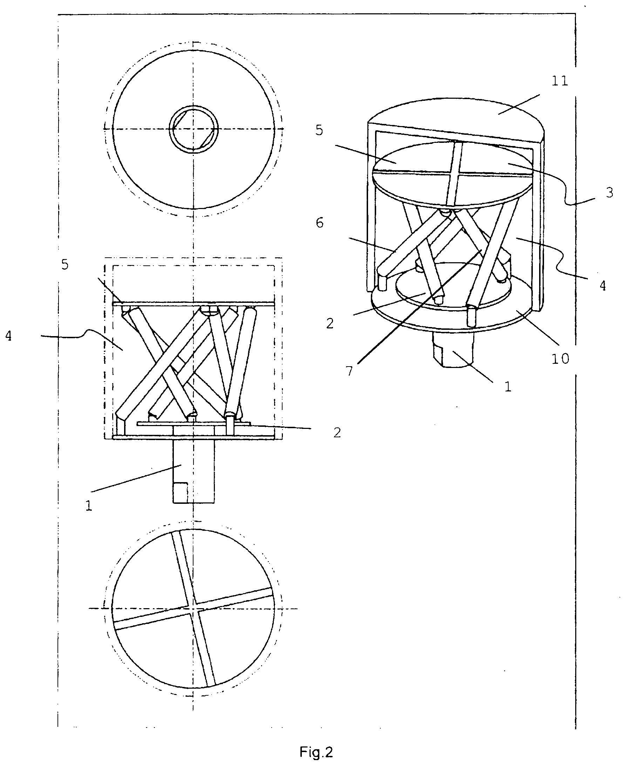

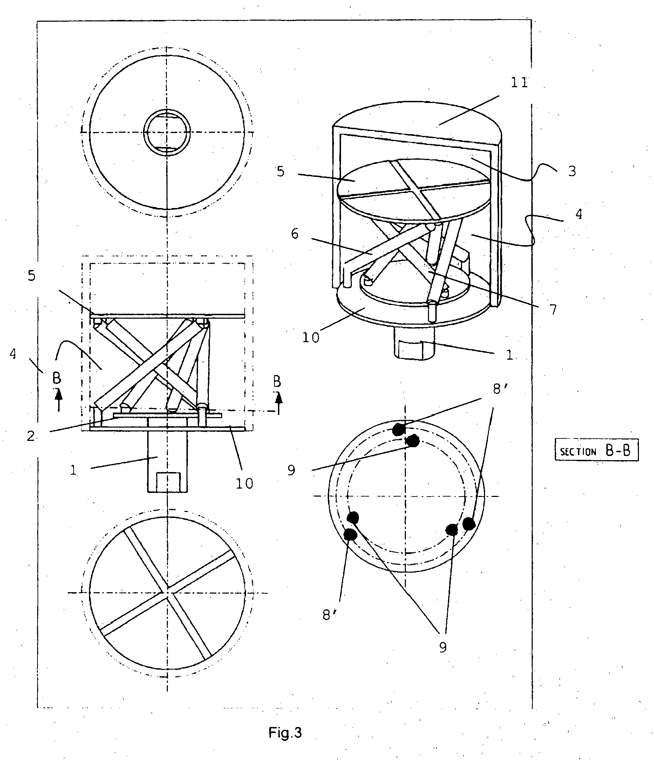

Referring to figs. 1, 2 and 3, according to a preferred embodiment, the partial turn actuator object of the present invention comprises an output shaft 1, a rotating plate 2, two chambers 3, 4, a rotating-translating piston 5, at least two rods 6, 7 positioned inside the chambers 4 and constrained by means of hinges 8, 8' and 9, 9'.

For the functioning of the actuator as it is explained in the following, it is sufficient to have a rod of type 6 and a rod of type 7.

In particular, the rod 6 is constrained at the bottom to the lower head 10 by means of the hinge 8 and at the top to the rotating-translating piston 5 by means of the hinge 8'; the rod 7 is constrained at the top to the rotating-translating piston 5 by means of the hinge 9 and at the bottom to the rotating plate 2 by means of the hinge 9'.

In addition, in order to provide an axial-symmetrical mechanism, so that the radial components of the forces are annulled, both the rods of type 6 and the rods of type 7 are advantageously three in number. In the following it is referred to an embodiment with a rod of type 6 and a rod of type 7, but what is described can be applied also to the embodiments with more couples of rods, for example with two triads of rods 6, 7. The driving power applied to the actuator, as it is shown in figs. 1-3, is provided by the pressure difference acting in the chambers 3, 4 and actuates the rotating-translating piston 5. Said piston 5 is connected to the lower head 10 and to the rotating plate 2 integral to the output shaft 1 by means of rods 6, 7 hinged on the same side of the piston 5. The rods are arranged in the same chamber of the piston. The useful effect is the rotating motion of the rotating plate 2 and the shaft 1 connected thereto.

The driving power pushes the rotating-translating piston 5 downwards, thus pushing the two rods 6, 7 which since they are hinged as previously described, bend to the horizontal position. In particular, the rod 6, fixed in the hinging point 8 with the lower head 10, causes the rotation of the rotating-translating piston 5. The rod 7 will follow the rotation of the rotating-translating piston 5 in its hinging point 9 and, by bending to the horizontal position, will rotate the rotating plate 2 to which said rod 7 is constrained. Clearly, the extent of the rotations can be determined at one's pleasure suitably dimensioning the length of the rods and the relative angular position of the four hinges 8, 8' and 9, 9'.

In the following there are described further configurations, whose functioning principle is the same.

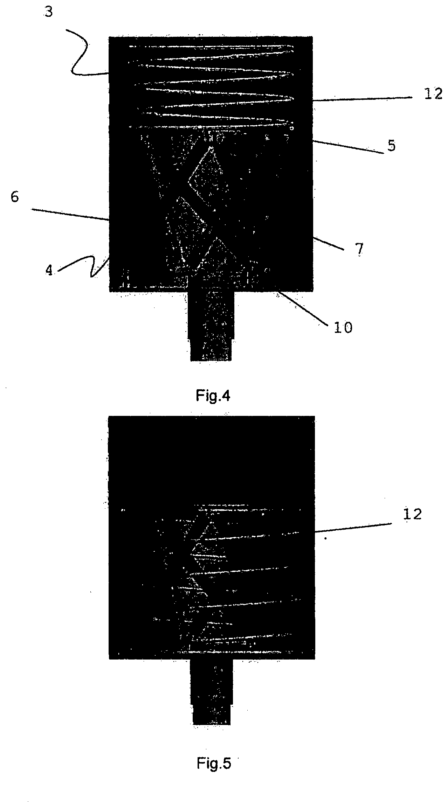

According to a preferred embodiment, said driving power, as it is shown in figure 4, is provided by the pressure difference acting in the chambers 3, 4 and by a compressed or pulled spring 12, which actuate the rotating-translating piston 5. As in the previous configuration, said piston 5 is connected to the lower head 10 and to the rotating plate 2 integral to the output shaft 1 by means of the rods 6, 7 hinged on the same side of the piston 5. The rods are arranged in the same chamber of the piston. The seat of the spring 12 is obtained in the chamber 3 of the piston 5 opposed to the one occupied by the rods 6, 7.

According to another preferred embodiment, as it is shown in figure 5, said seat of the spring is obtained in the same chamber 4 of the piston 5 occupied by the rods 6, 7.

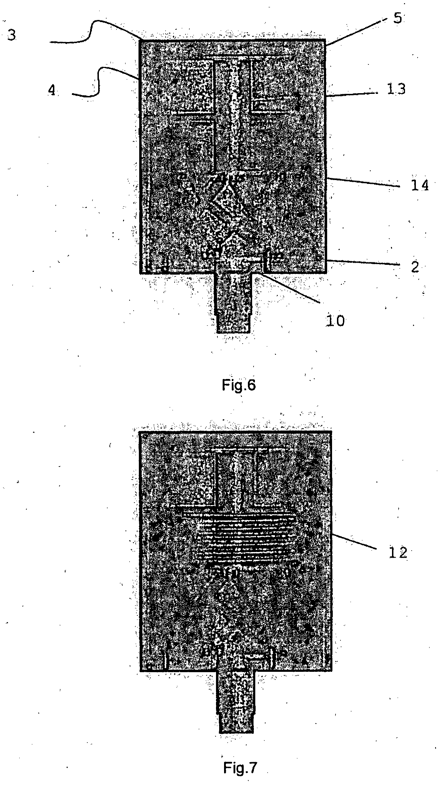

An alternative configuration is shown in fig. 6, in which the driving power actuates the rotating-translating piston 5 which is integral to a connector element 13 connected to a connecting disk 14, arranged outside the chambers 3, 4 under differential pressure.

Said connecting disk 14 is connected to the lower head 10 and to the rotating plate 2 integral to the output shaft 1 by means of the same rods 6, 7 hinged as in the previous configurations. The rods are arranged outside the chambers 3, 4 under pressure.

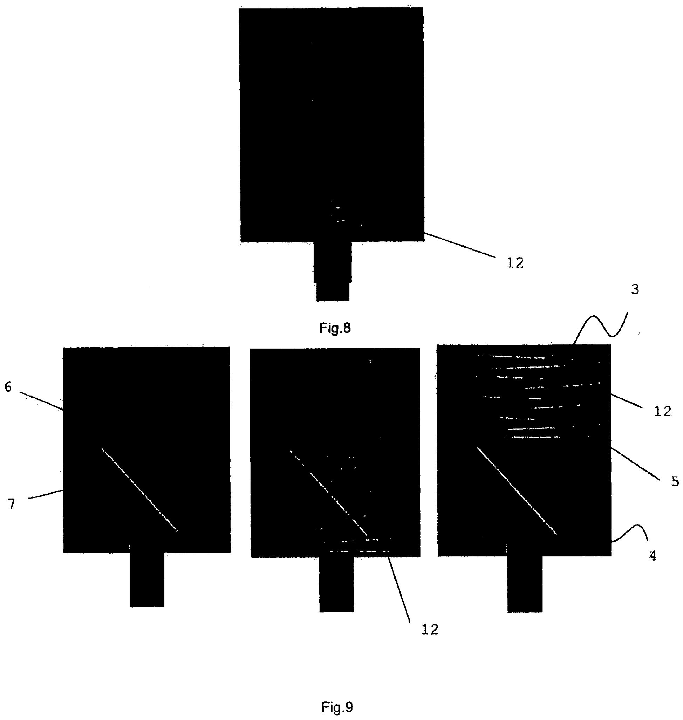

Fig. 7 and fig. 8 show two alternative solutions of the configuration shown in fig. 6 in which the seat of the spring 12 is positioned on the connecting disk 14 on the opposed side of the rods 6, 7 and on the rotating plate 2 occupied by the rods 6, 7, respectively.

An alternative configuration is shown in fig. 9, in which the rods 6, 7 are positioned respectively in the two different chambers 3, 4 of the piston 5. In particular said rods 7 are hinged as in the previous configurations, while said rods 6 in this case, are hinged to the upper head 11 (fixed point) and to the rotating-translating piston 5.

Said configuration is provided also in a version which comprises a spring 12, whose seat is positioned inside the chamber 4 of the piston 5 where the rods 7 which connect the piston 5 to the upper head 11 are arranged or in alternative the seat of the spring is obtained inside the chamber 3 of the piston 5 opposed to the previous one where the rods 6 are positioned.

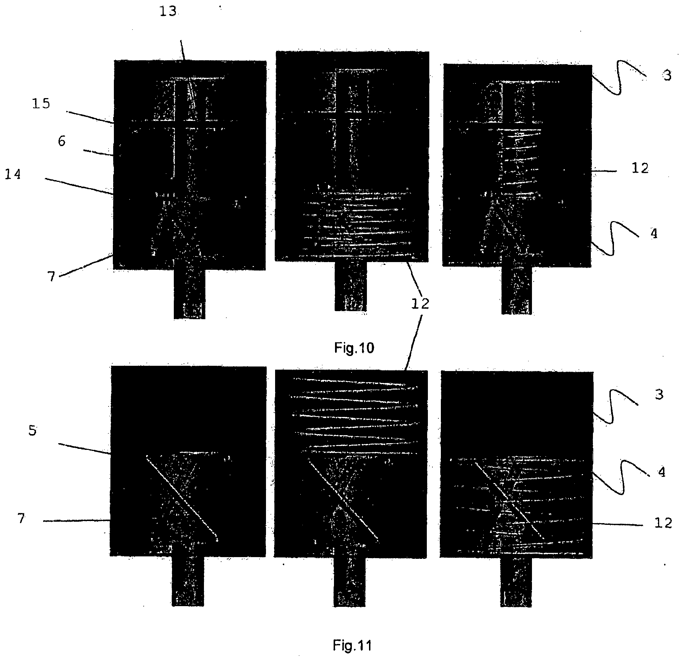

An alternative configuration is shown in fig. 10, in which the rotating-translating piston 5 is integral to a connector element 13 arranged outside the chambers 3, 4 under differential pressure, and the connecting disk 14 is connected to an intermediate head 15 and to the rotating plate 2 by means of rods 6, 7 hinged to the opposed sides of the connector elements 13.

Said configuration is provided also in a version which comprises a spring 12, whose seat is positioned either on the connecting disk 14 on the opposed side of the rods 6 or on the connecting disk 14 on the side where the rods 6 which connect this latter to the intermediate head 15 are arranged.

Another configuration is shown in fig. 11, in which the piston 5 can translate under the effect of the pressure difference between the chambers 3, 4, but it is blocked to the rotation. In this case it is sufficient that at least a rod 7 is hinged to the piston (hinge 9), which rod 7 is hinged in turn to the rotating plate 2 by means of the hinge 9'.

The rod 7 is arranged in the chamber 4 of the piston 5.

Said configuration is provided also in a version which comprises a spring 12 whose seat is positioned either on the rotating-translating piston 5 on the opposed side to the rods 7 or on the side in which the rods 7 connected to the rotating plate 2 are arranged.

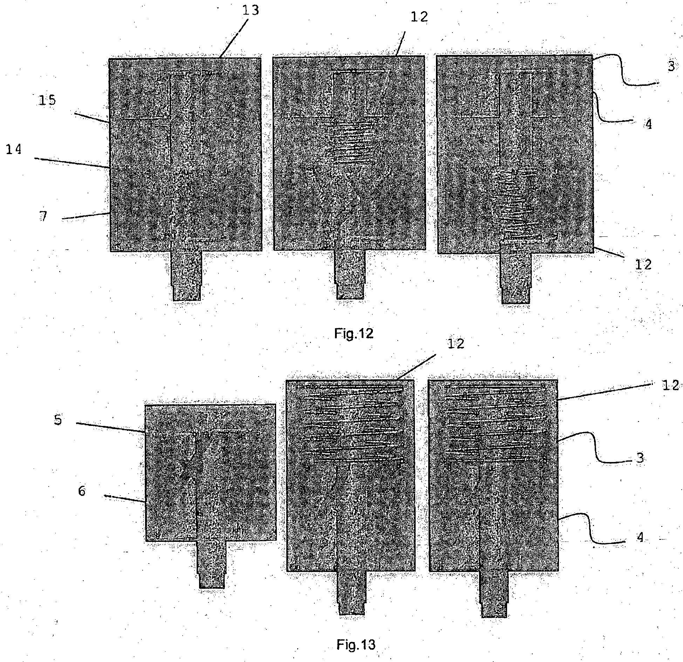

Another configuration is shown in fig. 12, in which, as the previous configuration, the piston 5 can translate under the effect of the pressure difference between the chambers 3, 4 but it is blocked to the rotation and has a connector element 13 connected to a connecting disk 14 arranged outside the chambers 3, 4.

Said connecting disk 14 is connected to the lower head 10 and to the rotating plate 2 integral to the output shaft 1 by means of the rods 7 hinged at the bottom to the rotating plate 2, and at the top to the connecting disk 14. The rods are arranged outside the chambers 3, 4 under pressure.

Said configuration is provided also in a version which comprises a spring 12, whose seat is positioned either on the connecting disk 14 on the opposed side of the rods 7 or on the side where the rods 7 connected to the rotating plate 2 are arranged.

Another configuration is shown in fig. 13 in which the output shaft 1 is blocked to the translation and it is connected to the rotating-translating piston 5 by a coupling, which allows translations of the rotating-translating piston 5 but not relative rotations of the same piston with respect to the output shaft 1.

Said configuration is provided also in a version which comprises a spring 12, whose seat is positioned on the rotating-translating piston 5, on the opposed side of the rods 6 or on the side in which the rods 6 connected to the lower head 10 are arranged.

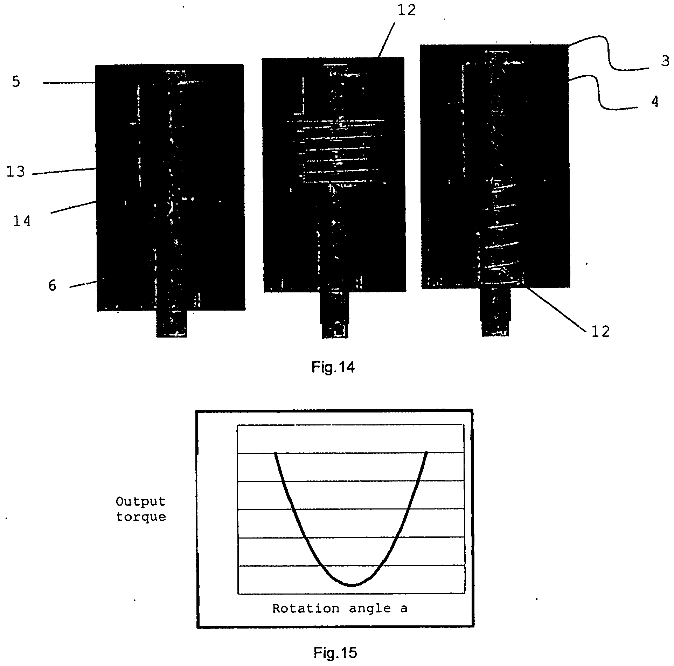

Another configuration is shown in fig. 14, in which the output shaft 1 is blocked to the translation while the rotating-translating shaft 5 is connected by means of a connector 13 to a connecting disk 14. One or more rods 6 are connected to the lower head 10 (fixed point) and to the connecting disk 14. Said configuration is provided also in a version which comprises a spring 12, whose seat is positioned on the connecting disk 14, on the opposed side of the rods 6 or on the side in which the rods 6 connected to the lower head 10 are arranged.

The interface between the device and the user can be obtained both by a male-female coupling and female-male coupling.

The movement of the device object of the present invention can generate both a rotation according to a linear stroke or vice versa; and a torque according to the output angle of rotation according to a linear force or vice versa: and it can convert the reading of a translation in a rotation reading and vice versa.

Given the absence of clearances, the system can be used for example in feed back systems of rotation, both axially and angularly or linearly by means of the introduction of a magnetic sensor applied to one of the translating elements.

The driving power in case of power flow which has the linear movement as input and the rotating movement as output can be made up of, for example but not exclusively, a pneumatic or oleo-dynamic piston, a spring, a mechanical actuation or a gravity one or by any other system able to generate a force or a torque according to the angle of rotation.

In case of the provision of a spring, this latter can transmit both a linear force and a torque according to the angle of rotation. For example, by constraining the spring to the rotating-translating spring 5 it is possible to use at the same time the linear movement work and the spring torsion one.

By modifying the kinematic motion geometry it is also possible to optimize the device according to what is required by the user.

In the following there are described some examples of the actuator output on which it is possible to intervene:
- torque curve according to the output angle of rotation according to the stroke of the piston or to the angle of the output shaft;
- angular or linear range;
- rotation direction.

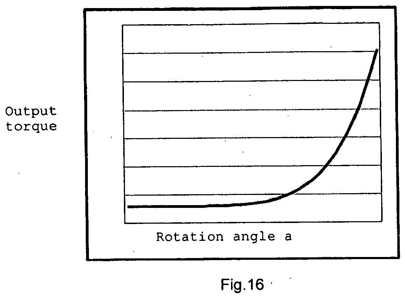

In particular, the torque curves according to the angle of rotation can be optimized so that they have the following developments:
- parabolic/hyperbolic curve with concavity upwards fig. 15;
- parabolic/hyperbolic curve with concavity downwards;
- nearly constant development (horizontal straight line):
- nearly constant derivative development (bent straight line);
- asymptotic curves with development from 0 to infinite, fig. 16 or similarly from infinite to zero;
and however, optimized in order to follow the development of the resistant torque according to the angle of rotation and the type of valve or device to which the actuator is connected.

## Claims

1. Partial turn actuator comprising an output shaft (1), a first element (5) with a degree of freedom to translation, said element (5) being moved by a driving power, at least a second axially constrained element (2, 10, 11, 15), at least one of said elements having a degree of freedom to rotation according to which it is mechanically connected to the output shaft (1) and at least a first and a second rod (6, 7) constrained by means of a first hinge (8, 8') to the first element (5) and by means of a second hinge (9, 9') to the second axially constrained element (2, 10, 11, 15), so that the translation of the first element (5) is converted in a rotation of the element having a degree of freedom to rotation, and as a consequence, of the output shaft (1) wherein:
- at least one of a said first or second rod (6, 7) is made up of a triad of rods,
- said driving power is provided by means of the pressure difference between two chambers (3, 4) positioned above and under the element (5) respectively, said element (5) being a piston, the partial turn actuator being **characterized in that** said second axially constrained element is a lower head (10) and a rotating plate (2), said first and second rod (6, 7) being positioned inside the chamber (4) and said rod (6,) being constrained to the lower head (10) and to the piston (5), and said second rod (7) being constrained to the piston (5) and to the rotating plate (2).

2. Partial turn actuator according to claim 1, wherein said piston (5) is integral to a connector element (13) connected to a connecting disk (14) arranged outside the chambers (3, 4), and said connecting disk (14) is connected to the lower head (10) and to the rotating plate (2) integral to the output shaft (1) by means of said first and second rod (6, 7).

3. Partial turn actuator according to claim 1 or 2, further comprising an elastic element (12) whose seat is obtained inside the chamber (3) of the piston (5) opposed to the one occupied by said first and second rod (6, 7).

4. Partial turn actuator according to claim 3, wherein said seat of the elastic element (12) is obtained in the chamber (4) of the piston (5) on the same side where said first and second rod (6, 7) are positioned.

5. Partial turn actuator according to claim 1, wherein said second axially constrained element is the rotating plate (2) and wherein said piston (5) can translate but it is blocked to the rotation and wherein said second (7) is positioned inside the chamber (4) of the piston (5) and is hinged to the piston (5) and to the rotating plate (2).

6. Partial turn actuator according to claim 5, wherein said connector element (13) and said connecting disk (14), arranged outside the chambers (3, 4), is connected to the lower head (10) and to the rotating plate (2) by means of said second (7) rod (7) hinged at the bottom to the rotating plate (2), and at the top to the connecting disk (14).

7. Partial turn actuator according to claim 5 or 6, further comprising an elastic element (12) whose seat is positioned on the piston (5) or on the connecting disk (14) on the side opposed to said second rod (7).

8. Partial turn actuator according to claim 7, wherein said seat of the elastic element (12) is positioned on the side where said second rod (7) connected to the rotating plate (2) is arranged.

9. Partial turn actuator according to claim 1, wherein said second axially constrained element is the lower head (10) and said output shaft (1) is blocked to the translation and is connected to the piston (5) and said first rod (6) is connected to the piston (5) and to the lower head (10).

10. Partial turn actuator according to claim 9, wherein said piston (5) is connected by means of a connector (13) to a connecting disk (14) and said first rod (6) is connected to the lower head (10) and to the connecting disk (14).

11. Partial turn actuator according to claim 9 or 10, further comprising an elastic element (12), whose seat is positioned on the piston (5) or on the connecting disk (14) on the side opposed to said first rod (6).

12. Actuator according to claim 11, wherein said elastic element is further positioned on the side where the rod (6) connected to the lower head (10) is arranged.

## Patentansprüche

1. Teilschwenkantrieb, umfassend eine Abtriebswelle (1), ein erstes Element (5) mit einem Freiheitsgrad der Translation, wobei das besagte Element (5) durch einen Antriebsmotor bewegt wird, mindestens ein zweites axial gedrängtes Element (2, 10, 11, 15), wobei mindestens eines der besagten Elemente einen Freiheitsgrad der Rotation aufweist, wobei er entsprechend mit diesem mechanisch mit der Abtriebswelle (1) verbunden ist und mindestens eine erste und eine zweite Stange (6, 7) umfasst, die mittels eines ersten Scharniers (8, 8') in Bezug auf das erste Element (3) und mittels eines zweiten Scharniers (9, 9') in Bezug auf das zweite Element (2, 10, 11, 15) derart gedrängt sind, dass die Translation des ersten Elements (5) in eine Rotation des Elements mit einem Freiheitsgrad der Rotation umgewandelt wird, und damit der Abtriebswelle (1), wobei:
- mindestens eine der besagten ersten und zweiten Stangen (6, 7) aus einer Triade von Stangen besteht,
- die besagte Betätigungsenergie mittels der Druckdifferenz zwischen zwei Kammern (3, 4) vorgesehen ist, die oberhalb bzw. unterhalb des Elements (5) positioniert sind, wobei das besagte Element (5) ein Kolben ist,
wobei der Teilschwenkantrieb **dadurch gekennzeichnet ist , dass** das besagte zweite axial gedrängte Element einen unteren Kopf (10) und eine Drehplatte (2) aufweist, wobei die besagten ersten und zweiten Stangen (6, 7) innerhalb der ersten und zweiten Kammer (4) positioniert sind und die besagte Stange (6) gegenüber dem unteren Kopf (10) und dem Kolben (5) gedrängt ist, und wobei die besagte zweite Stange (7) in Bezug auf den Kolben (5) und auf die Drehplatte (2) gedrängt ist.

2. Teilschwenkantrieb nach Anspruch 1, wobei der besagte Kolben (5) in einem Verbindungselement (12) integriert ist, das mit einer Verbindungsscheibe (14) verbunden ist, die außerhalb der Kammern (3, 4) angeordnet ist, und wobei die besagte Verbindungsscheibe (14) mit dem unteren Kopf (10) und der Drehplatte (2) integral in Bezug auf die Abtriebswelle (1) mittels der besagten ersten und zweiten Stangen (6, 7), verbunden ist.

3. Teilschwenkantrieb nach den Ansprüchen 1 oder 2, ferner ein elastisches Element (12) umfassend , dessen Sitz im Inneren der Kammer (3) des Kolbens (5) gebildet wird, die entgegengesetzt zur der von den besagten ersten und zweiten Stangen (6, 7) angeordnet ist.

4. Teilschwenkantrieb nach Anspruch 3, wobei der besagte Sitz des elastischen Elements (12) in der Kammer (4) des Kolbens (5) auf der gleichen Seite ausgebildet ist, wo die besagten ersten und zweiten Stangen (6, 7) angeordnet sind.

5. Teilschwenkantrieb nach Anspruch 1, wobei das besagte zweite axial gedrängte Element die Drehplatte (2) aufweist und wobei sich der besagte Kolben (5) bewegen kann aber mit Bezug auf eine Drehung verriegelt ist, und wobei die besagte zweite Stange (7) innerhalb der Kammer (4) angeordnet und am Kolben (5) und an die Drehplatte (2) gelenkt ist.

6. Teilschwenkantrieb nach Anspruch 5, wobei das besagte Verbindungselement (13) und die besagte Verbindungsscheibe (14) außerhalb der Kammern (3, 4) angeordnet und mit dem unteren Kopf (10) und mit der Drehscheibe (2) mittels der besagten zweiten Stange (7) auf dem Boden der besagten Drehplatte (2) verbunden sind, und oben auf die Verbindungsscheibe (14) gelenkt sind.

7. Teilschwenkantrieb nach Anspruch 5 oder 6, ferner ein elastisches Element (12) umfassend, dessen Sitz auf dem Kolben (5) oder auf der Verbindungsscheibe (14) auf der gegenüberliegenden Seite zu der besagten zweiten Stange (7), positioniert ist.

8. Teilschwenkantrieb nach Anspruch 7, wobei der besagte Sitz des elastischen Elements (12) auf der Seite positioniert ist, wo die besagte zweite Stange (7) mit der Drehplatte (2) verbunden ist.

9. Teilschwenkantrieb nach Anspruch 1, wobei das besagte zweite axial gedrängte Element den unteren Kopf (10) aufweist und die besagte Abtriebswelle (1) in Bezug auf Translation gesperrt und mit dem Kolben (5) und die besagte erste Stange (6) mit dem Kolben (5) und dem unteren Kopf (10) verbunden ist.

10. Teilschwenkantrieb nach Anspruch 9, wobei der besagte Kolben (5) mittels einen Verbinders (13) mit einer Verbindungsscheibe (14) verbunden ist und die besagte erste Stange (6) mit dem unteren Kopf (10) und der Verbindungsscheibe (14) verbunden ist.

11. Teilschwenkantrieb nach Anspruch 9 oder 10, ferner ein elastisches Element (12) umfassend, dessen Sitz auf dem Kolben (5) oder auf der Verbindungsscheibe (14) auf der der besagten ersten Stange (6) gegenüberliegenden Seite, positioniert ist.

12. Teilschwenkantrieb nach Anspruch 11, wobei der besagte elastische Element weiter auf der Seite positioniert ist, wo die mit dem unteren Kopf (10) verbundene Stange (6) angeordnet ist.

## Revendications

1. Actionneur à fraction de tour, comprenant un arbre de sortie (1), un premier élément (5) avec un degré de liberté de translation, ledit élément (5) étant déplacé par un moteur d'entraînement, au moins un deuxième élément (2, 10, 11, 15) sollicité axialement, au moins l'un desdits éléments ayant un degré de liberté de rotation selon lequel il est relié mécaniquement à l'arbre de sortie (1) et au moins une première et une deuxième tige (6, 7) sollicitées au moyen d'une première charnière (8, 8') par rapport au premier élément (3) et au moyen d'une deuxième charnière (9, 9') par rapport au deuxième élément (2, 10, 11, 15) sollicité axialement, de telle sorte que la translation du premier élément (5) est convertie en une rotation de l'élément ayant un degré de liberté de rotation, et par conséquent de l'arbre de sortie (1), dans lequel:
- au moins une première et une deuxième tige (6, 7) sont formées par une triade de tiges,
- ladite énergie d'actionnement est alimentée au moyen de la différence de pression entre les deux chambres (3, 4) positionnées au-dessus et au-dessous de l'élément (5) respectivement, ledit élément (5) étant un piston,
l'actionneur a fraction de tour étant caractérisé du fait que ledit deuxième élément sollicité axialement est une tête inférieure (10) et une plaque tournante (2), lesdites première et deuxième tiges (6, 7) étant positionnées à l'intérieur de la chambre (4) et ladite tige (6) étant sollicitée par rapport à la tête inférieure (10) et au piston (5), et ladite deuxième tige (7) étant sollicitée par rapport au piston (5) et à la plaque tournante (2).

2. Actionneur à fraction de tour selon la revendication 1, dans lequel ledit piston (5) est intégré dans un élément de connecteur (13) relié à un disque de liaison (14) disposé à l'extérieur des chambres (3, 4), et ledit disque de liaison (14) est relié à la tête inférieure (10) et à la plaque tournante (2) et intégré à l'arbre de sortie (1) au moyen de ladite première et deuxième tige (6, 7).

3. Actionneur à fraction de tour selon la revendication 1 ou 2, comprenant en outre un élément élastique (12) dont le siège est formé à l'intérieur de la chambre (3) du piston (5) opposée à celle occupée par lesdites première et deuxième tiges (6, 7).

4. Actionneur à fraction de tour selon la revendication 3, dans lequel ledit siège de l'élément élastique (12) est formé dans la chambre du piston (4) (5) sur le même côté où lesdites première et deuxième tiges (6, 7) sont positionnées.

5. Actionneur à fraction de tour selon la revendication 1, dans lequel ledit deuxième élément est axialement sollicité est la plaque tournante (2) et dans lequel ledit piston (5) peut bouger mais est bloqué en rotation et dans lequel ladite deuxième tige (7) est positionnée à l'intérieur de la chambre (4) du piston (5) et est articulée au piston (5) et à la plaque tournante (2).

6. Actionneur à fraction de tour selon la revendication 5, dans lequel ledit élément de connecteur (13) et ledit disque de liaison (14), disposés à l'extérieur des chambres (3, 4), sont reliés à la tête inférieure (10) et à la plaque tournante (2) au moyen de ladite deuxième tige (7) articulée au fond de la plaque tournante (2), et au dessus du disque de liaison (4).

7. Actionneur à fraction de tour selon la revendication 5 ou 6, comprenant en outre un élément élastique (12) dont le siège est positionné sur le piston (5) ou sur le disque de liaison (14) sur le côté opposé à ladite deuxième tige (7).

8. Actionneur à fraction de tour selon la revendication 7, dans lequel ledit siège de l'élément élastique (12) est positionné sur le côté dans lequel ladite deuxième tige (7) est reliée à la plaque tournante (2).

9. Actionneur à fraction de tour selon la revendication 1, dans lequel ledit deuxième élément axialement sollicité est la tête inférieure (10) et ledit arbre de sortie (1) est bloqué en translation et est relié au piston (5) et ladite première tige (6) est reliée au piston (5) et à la tête inférieure (10).

10. Actionneur à fraction de tour selon la revendication 9, dans lequel ledit piston (5) est relié par un connecteur (13) à un disque de liaison (14) et ladite première tige (6) est reliée à la tête inférieure (10) et au disque de liaison (14).

11. Actionneur à fraction de tour selon la revendication 9 ou 10, comprenant en outre un élément élastique (12), dont le siège est positionné sur le piston (5) ou sur le disque de liaison (14) sur le côté opposé à ladite première tige (6) .

12. Actionneur à fraction de tour selon la revendication 11, dans lequel ledit élément élastique est en outre positionné sur le côté où la tige (6) reliée à la tête inférieure (10) est agencée.
